# NEUE EUROPÄISCHE PATENTSCHRIFT

(11) **EP 1 589 279 B2**
(45) Veröffentlichungstag und Bekanntmachung des Hinweises auf die Entscheidung über den Einspruch: **23.10.2013**
(45) Hinweis auf die Patenterteilung: 10.01.2007
(21) Anmeldenummer: 05005261.2
(22) Anmeldetag: 10.03.2005
(51) Int. Cl.: F16P 3/14, F16P 3/04, B30B 15/28, B21D 55/00

(54) **Verfahren zur Sicherung einer Werkzeugmaschine und optoelektronischer Sensor zur Durchführung eines solchen Verfahrens**
Safety method for a machine tool and optoelectronic sensor for carrying out such a method
Procédé pour la sécurité d'une machine-outil et capteur optoélectronique pour la mise en oeuvre d'un tel procédé

(30) Priorität: 23.04.2004 DE 102004020024
(43) Veröffentlichungstag der Anmeldung: 26.10.2005
(73) Patentinhaber: SICK AG, 79183 Waldkirch (DE)
(72) Erfinder: Dieterle, Gerhard, 79263 Simonswald (DE); Braune, Ingolf, 79194 Gundelfingen (DE)
(74) Vertreter: Manitz, Finsterwald & Partner GbR

(56) Entgegenhaltungen:
- EP-A2- 0 166 351
- DE-A1- 4 422 497
- DE-A1- 10 143 505
- DE-A1- 19 938 639
- DE-C2- 19 825 829
- DE-U1- 20 102 192
- US-A- 4 907 432
- US-A1- 2003 062 469
- US-B1- 6 536 559
- US-U- 4 166 369
- US-U- 4 430 879
- US-U- 4 772 801
- US-U- 4 907 432

## Beschreibung

Die Erfindung betrifft ein Verfahren zur Sicherung einer Werkzeugmaschine mit einem ersten Werkzeugteil, das Arbeitsbewegungen in Richtung eines zweiten Werkzeugteils ausführt, um hierdurch einen Bearbeitungsvorgang an einem Werkstück durchzuführen, bei dem ein optoelektronischer Sensor ein volumenförmiges Schutzfeld zwischen den Werkzeugteilen überwacht, indem Licht mittels einer Sendeeinrichtung entlang eines zwischen den Werkzeugteilen ausgebildeten Öffnungsspalts ausgesandt und mittels einer Empfangseinrichtung detektiert wird, welche eine Matrix von lichtempfindlichen Elementen umfasst, wobei ein Anhalten des ersten Werkzeugteils erfolgt, wenn einzelne oder bestimmte Gruppen der lichtempfindlichen Elemente kein Licht empfangen siehe z.B. Ein Verfahren zur Sicherung einer Werkzeugmaschine mit einem ersten Werkzeugteil, das Arbeitsbewegungen in Richtung eines zweiten Werkzeugteils ausführt, um hierdurch einen Bearbeitungsvorgang an einem Werkstück durchzuführen, bei dem ein optoelektronischer Sensor ein Schutzfeld zwischen den Werkzeugteilen überwacht, indem Licht mittels einer Sendeeinrichtung entlang eines zwischen den Werkzeugteilen ausgebildeten Öffnungsspaltes ausgesandt und mittels einer Empfangseinrichtung detektiert wird, und während und/oder nach dem Bearbeitungsvorgang Relativpositionen zwischen einzelnen Werkstückbereichen ermittelt werden, ist aus US 4,772,801 bekannt.

Bei der genannten Werkzeugmaschine handelt es sich typischerweise um eine Gesenkpresse zum Biegen, Abkanten, Schneiden oder Stanzen von Werkstücken, wie z.B. Blechteilen. Das genannte erste Werkzeugteil ist in diesem Fall durch ein Oberwerkzeug gebildet, das eine längliche Biegelinie oder Schnittkante besitzt. Dieses Oberwerkzeug wird während seiner Arbeitsbewegung vertikal nach unten gegen ein Unterwerkzeug bewegt, das als zweites Werkzeugteil dient und an dem das Werkstück an- oder aufliegt.

Für jeden Bearbeitungsvorgang muss zunächst das zuvor bearbeitete Werkstück entnommen und das neu zu bearbeitende Werkstück in den Öffnungsspalt zwischen den Werkzeugteilen eingeführt werden. Dies erfolgt in der Regel manuell durch eine Bedienperson. Um während des Schließens des Öffnungsspalts eine Verletzung, insbesondere der Hände der Bedienperson, durch eine gefahrbringende Bewegung eines Teils der Werkzeugmaschine zu vermeiden, überwacht der optoelektronische Sensor ein Schutzfeld, das sich typischerweise unterhalb des bewegten Oberwerkzeugs erstreckt. Dieses Schutzfeld ist volumenförmig, d.h. zumindest sein Umriss erstreckt sich entlang eines zweidimensionalen Querschnitts, so dass der Sensor auf gefahrbringende Eingriffe aus verschiedenen Richtungen schnell und zuverlässig reagieren und ein Anhalten der gefahrbringenden Bewegung auslösen kann.

Zusätzlich zu dem genannten optoelektronischen Sensor sind bei aus dem Stand der Technik bekannten Werkzeugmaschinen oftmals separate Messeinrichtungen vorgesehen, die zu einem Vermessen des bearbeiteten Werkstücks geeignet sind. Mittels derartiger Messeinrichtungen kann beispielsweise festgestellt werden, ob ein Bearbeitungsvorgang an einem Werkstück korrekt und fehlerfrei ausgeführt wurde.

Eine Aufgabe der Erfindung besteht darin, ein Verfahren der eingangs genannten Art sowie einen optoelektronischen Sensor zur Durchführung eines solchen Verfahrens bereitzustellen, welche mit möglichst geringem wirtschaftlichen Aufwand neben einer Absicherung des Gefahrenbereichs einer Werkzeugmaschine auch noch Zusatzfunktionen erfüllen können.

Diese Aufgabe wird mit einem erfindungsgemäßen Verfahren gemäß Anspruch 1 gelöst. Weiterhin wird die genannte Aufgabe durch einen erfindungsgemäßen optoelektronischen Sensor gemäß Anspruch 7 gelöst, dessen Auswerte-und Steuereinheit nicht nur zum Anhalten der Werkzeugmaschine beim Auftreten von Gefahren, sondern zusätzlich auch zur Ermittlung von Relativpositionen zwischen einzelnen Werkstück- oder Werkzeugbereichen in Abhängigkeit von den durch die lichtempfindlichen Elemente gelieferten Signalen, ausgebildet ist.

Es wird also ein einzelner, eine Sende- sowie eine Empfangseinrichtung umfassender optoelektronischer Sensor sowohl für eine Absicherung eines Gefahrenbereichs an einer Werkzeugmaschine als auch für ein Vermessen des Werkstücks eingesetzt, so dass die erforderliche Vorsehung einer separaten, mit zusätzlichen Kosten verbundenen Messeinrichtung eingespart werden kann. Durch die genannte Doppelfunktion des optoelektronischen Sensors ergibt sich somit eine erhöhte Wirtschaftlichkeit bei der Durchführung des eingangs genannten Verfahrens.

Von besonderem Vorteil ist gemäß der Erfindung der Umstand, dass nicht nur ein Werkstück, sondern auch ein in der jeweiligen Werkzeugmaschine eingesetztes Werkzeug vermessen werden kann. Durch eine solche Vermessung kann überprüft werden, ob jeweils das richtige Werkzeug eingespannt wurde, insbesondere ob Ober- und Unterwerkzeug zueinander passen. Auf diese Weise können Unfälle vermieden werden, die bei nicht zueinander passenden Ober- und Unterwerkzeugen auftreten können, beispielsweise wenn ein Oberwerkzeug ein nicht passendes Unterwerkzeug sprengt.

Wenn also erfindungsgemäß festgestellt wird, dass nicht zueinander passende Ober- und Unterwerkzeuge eingesetzt wurden, kann dies automatisch das Auslösen eines Alarmsignals bzw. ein Anhalten der Maschine bewirken.

Vorteilhaft bei Anwendung des erfindungsgemäßen Verfahrens ist ferner die Tatsache, dass durch die Auswertung der von den lichtempfindlichen Elementen gelieferten Signale ein relativ genaues Vermessen von Werkstück- oder Werkzeugbereichen bzw. eine vergleichsweise exakte Bestimmung des Schattenrisses von Werkstück- oder Werkzeugbereichen erfolgen kann. Mittels des optoelektronischen Sensors kann somit nicht nur ermittelt werden, ob sich die Form des bearbeiteten Werkstücks innerhalb vorgegebener, vergleichsweise grober Toleranzen bewegt, sondern es kann vielmehr eine exakte Bestimmung der Form des vermessenden Werkstücks bzw. der vermessenen Werkstück- oder Werkzeugbereiche erfolgen. Dadurch wird es beispielsweise möglich, bei Gesenkpressen zum Biegen von Werkstücken nach Abschluss des Biegevorgangs zu überprüfen, ob der erzeugte Biegewinkel einem vorgegebenen Sollwert entspricht. Mit dem erfindungsgemäß eingesetzten optoelektronischen Sensor kann also neben einer Absicherung der Werkzeugmaschine und einem Überprüfen des jeweils eingesetzten Werkzeugs auch eine genaue Überprüfung eines durchgeführten Bearbeitungsvorgangs stattfinden.

In Abhängigkeit von den Relativpositionen zwischen einzelnen Werkstückbereichen können verschiedene Vorgänge ausgelöst werden. Beispielsweise ist es möglich, eine Signaleinrichtung zu beaufschlagen, welche anzeigt, ob ein Bearbeitungsvorgang an einem Werkstück korrekt durchgeführt wurde. Ebenso kann eine Klassifizierung eines bearbeiteten Werkstücks, z.B. hinsichtlich der Güte der erfolgten Bearbeitung, erfolgen. Zudem ist es bei einer besonders bevorzugten Verfahrensvariante möglich, in Abhängigkeit von den Relativpositionen eine Fortsetzung eines Bearbeitungsvorgangs oder auch einen neuen Bearbeitungsvorgang an einem vermessenden Werkstück auszuführen, um beispielsweise das Ergebnis eines unzureichenden Bearbeitungsvorgangs zu verbessern. Wenn also bei einer Gesenkpresse zum Biegen eines Werkstücks beispielsweise festgestellt wird, dass der erzeugte Biegewinkel noch nicht das geforderte Maß erreicht hat, kann das erste Werkzeugteil nochmals so weit in Richtung des zweiten Werkzeugteils bewegt werden, dass sich letztlich der gewünschte Biegewinkel einstellt. Eine entsprechende Überprüfung und Nachbesserung kann dabei im Rahmen jedes einzelnen Biegevorgangs erfolgen, so dass es nicht nötig ist, die Werkzeugmaschine vorab durch Testserien auf einen gewünschten Biegewinkel einzustellen. Die zur Erzielung eines exakten Biegewinkels gemäß Stand der Technik nötige Feineinstellung der Werkzeugmaschine mittels Testserien kann vielmehr durch eine Ansteuerung der Werkzeugmaschine in Abhängigkeit von den Relativpositionen ersetzt werden.

Die erfindungsgemäßen Relativpositionen oder Messwerte können vor, während und/oder nach dem Bearbeitungsvorgang ermittelt werden. Somit kann mit dem erfindungsgemäß eingesetzten optoelektronischen Sensor der Grundzustand des zu bearbeitenden Werkstücks vor dem Bearbeitungsvorgang, die Form des Werkstücks während verschiedener Phasen des Bearbeitungsvorgangs und schließlich die Form des Werkstücks nach Abschluss des Bearbeitungsvorgangs ermittelt werden. Dies ermöglicht eine lückenlose Überwachung des gesamten Bearbeitungsvorgangs, wobei gleichzeitig sichergestellt werden kann, dass das jeweils gewünschte Bearbeitungsergebnis auch tatsächlich erzielt wird.

Erfindungsgemäß werden Gruppen benachbarter lichtempfindlicher Elemente des optoelektronischen Sensors als Messfenster definiert und es werden nur die von diesen Messfenstern gelieferten Signale zur Ermittlung der Relativpositionen zwischen den einzelnen Werkstückbereichen herangezogen. Auf diese Weise müssen nicht immer die von allen lichtempfindlichen Elementen gelieferten Signale zur Auswertung herangezogen werden. Vielmehr genügt es, die Messfenster so zu positionieren, dass die für den jeweiligen Bearbeitungsvorgang relevanten Bereiche des Werkstückes überwacht werden können. Dabei werden die Messfenster während eines Bearbeitungsvorgangs innerhalb der Matrix der lichtempfindlichen Elemente verschoben und/oder in ihrer Größe und/oder ihrer Form verändert werden können. Hierdurch kann sichergestellt werden, dass auch während des Bearbeitungsvorgangs, bei dem ein Werkstück seine Form verändert, immer diejenigen Werkstückbereiche beobachtet werden können, die für die Beurteilung der Qualität des Bearbeitungsvorgangs von Relevanz sind. Um dies zu erreichen, kann die genannte Verschiebung bzw. Veränderung der Messfenster in Abhängigkeit von den Relativpositionen, von Betriebszuständen der Werkzeugmaschine und/oder von Eingaben einer Bedienperson erfolgen. Dabei ist es insbesondere möglich, bei einer Biegepresse eine Verschiebung bzw. Veränderung der Messfenster durch das die Biegevorgänge steuernde Programm vorzugeben.

Besonders bevorzugt ist es, wenn mittels Bildverarbeitungsalgorithmen aus den von den lichtempfindlichen Elementen gelieferten Signalen Bereiche des Werkstücks mit geradem Konturverlauf bestimmt und die Messfenster in diese Bereiche gelegt werden. Für die Bestimmung der Qualität bzw. des Ergebnisses eines Biegvorgangs genügt es nämlich z.B., wenn zwei Werkstückbereiche mit jeweils geradem Konturverlauf bestimmt, die Messfenster in diese Bereiche gelegt werden und dann der Biegewinkel zwischen den beiden Werkstückbereichen mit geradem Konturverlauf bestimmt wird.

Die Sendeeinrichtung eines erfindungsgemäßen optoelektronischen Sensors ist bevorzugt zur Aussendung eines parallelen Lichtbündels ausgelegt, welches die gesamte Matrix der lichtempfindlichen Elemente der Empfangseinrichtung beaufschlagt. Durch den Einsatz eines solchen parallelen Lichtbündels, welches bevorzugt senkrecht auf die Matrix der lichtempfindlichen Elemente auftrifft, kann der Schattenriss von Werkstückbereichen exakt bestimmt werden.

Der optoelektronische Sensor ist in einer festen Relativposition zum ersten Werkzeugteil an der Werkzeugmaschine selbst angebracht. Bei Anbringung am bewegten Werkzeugteil kann sichergestellt werden, dass neben der erfindungsgemäßen Messfunktion auch immer eine ausreichende Absicherung des Gefahrenbereichs, welcher unmittelbar an das bewegte Werkzeugteil angrenzt, gegeben ist. Die Auswerte- und Steuereinheit des optoelektronischen Sensors sowie dessen Empfangseinrichtung können miteinander gekoppelt und insbesondere in einem gemeinsamen Gehäuse untergebracht sein.

Weitere bevorzugte Ausführungsformen der Erfindung sind in den Unteransprüchen erwähnt.

Die Erfindung wird nachfolgend anhand eines Ausführungsbeispiels unter Bezugnahme auf Figuren beispielhaft erläutert; in diesen zeigen:
- Fig. 1: eine schematische Frontansicht einer Gesenkbiegepresse, und
- Fig. 2a,b: jeweils eine schematische Seitenansicht von Teilen dieser Gesenkbiegepresse in unterschiedlichen Phasen eines normalen Bearbeitungsvorgangs.

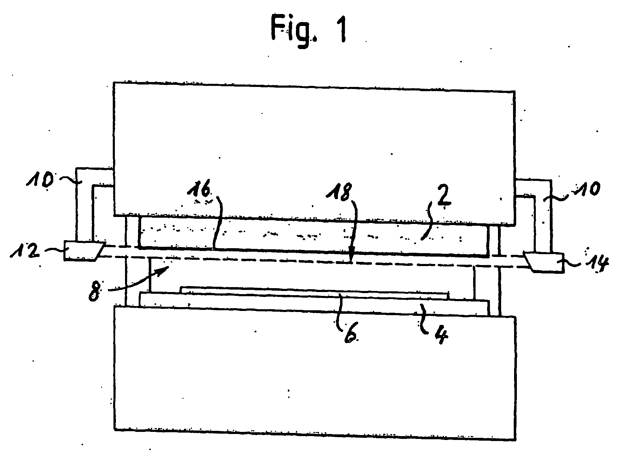

Die in Fig. 1 gezeigte Gesenkbiegepresse besitzt ein Oberwerkzeug bzw. einen Pressbalken 2, das bzw. der zu einer Arbeitsbewegung vertikal nach unten gegen ein Unterwerkzeug 4 angetrieben werden kann, um ein auf dem Unterwerkzeug 4 aufliegendes Werkstück 6 zu biegen. Während dieser Arbeitsbewegung wird ein Öffnungsspalt 8 zwischen dem Oberwerkzeug 2 und dem Werkstück 6 allmählich geschlossen.

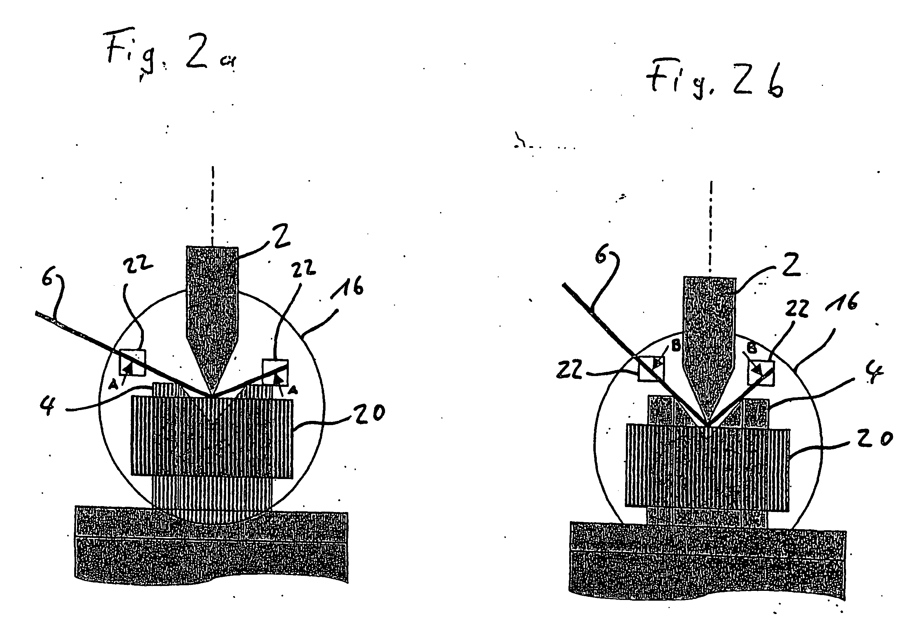

An den beiden Seiten des Pressbalkens 2 ist jeweils ein Haltearm 10 vorgesehen. Die Haltearme 10 tragen eine Sendeeinrichtung 12 und eine ortsauflösende Empfangseinrichtung 14, die Teile eines optoelektronischen Sensors und zum Oberwerkzeug 2 ausgerichtet sind. Die Sendeeinrichtung 12 besitzt eine z.B. als LED oder Laserdiode ausgebildete Lichtquelle mit einer Sendeoptik (in den Figuren nicht gezeigt), die das Sendelicht der Lichtquelle zu einem Lichtstrahl 16 aufweitet. In meisten Anwendungsfällen der Erfindung ist es sinnvoll, den Lichtstrahl 16 derart aufzuweiten, dass z.B. auch Teile des Oberwerkzeugs 2 vom Lichtstrahl 16 erfasst werden (siehe auch Fig. 2a, b). Die Empfangseinrichtung 14 besitzt einen rechteckigen, z.B. in CMOS-, CID-, CCD-Technik oder dergleichen ausgebildeten Matrix-Empfänger, der von dem Lichtstrahl 16 beaufschlagt wird und der so bemessen ist, dass der Lichtstrahl mit seinem vollen Querschnitt auf den Empfänger auftrifft.

Der Lichtstrahl 16 durchquert den Öffnungsspalt 8 unterhalb des Oberwerkzeugs 2. Der Umriss eines entsprechend aktivierten Teils der Empfangseinrichtung 14 definiert innerhalb des Lichtstrahls 16 ein volumenförmiges Schutzfeld 18 zwischen dem Oberwerkzeug 2 und dem Unterwerkzeug 4, wie nachfolgend in Verbindung mit Fig. 2a und 2b noch erläutert wird. Sobald eine Auswerte- und Steuereinrichtung des Sensors (in den Figuren nicht gezeigt) eine Unterbrechung des Lichtstrahls 16 innerhalb des Schutzfelds 18 detektiert, löst sie einen Abschaltvorgang zum Anhalten des Oberwerkzeugs 2 aus. Dadurch wird eine Bedienperson, die beispielsweise das Werkstück 6 in den Öffnungsspalt 8 einführt und dort fixiert, vor Verletzungen durch das Oberwerkzeug 2 geschützt.

Nachfolgend wird anhand der Fig. 2a und 2b die Funktionsweise der erfindungsgemäß ausgestatteten Gesenkbiegepresse gemäß Fig. 1, welche mit einem gegenüber Fig. 1 stärker aufgeweiteten Lichtstrahl 16 arbeitet, erläutert.

Fig. 2a und 2b zeigen jeweils das Oberwerkzeug 2, das Unterwerkzeug 4, das darauf aufliegende Werkstück 6 und den im Querschnitt kreisrunden Lichtstrahl 16 in einer schematischen Seitenansicht.

Die Empfangseinrichtung 14 mit ihrer Empfangsmatrix ist derart bemessen, dass der in den Figuren 2a und 2b dargestellte Lichtstrahl 16 mit seinem vollen Querschnitt auf die Empfangseinrichtung 14 auftrifft, so dass mittels der Empfangsmatrix detektiert werden kann, ob der Lichtweg zwischen Lichtsender 12 und Lichtempfänger 14 an einer beliebigen Stelle des Lichtstrahls 16 unterbrochen ist. Diese Informationen, die von den einzelnen Empfangselementen der Empfangsmatrix geliefert werden, gelangen erfindungsgemäß zu einer Auswerte-Steuereinheit, welche diese Informationen in unterschiedlicher Weise verarbeitet:

Diejenigen Empfangselemente, die dem in den Figuren 2a und 2b dargestellten, rechteckigen, unterhalb des Oberwerkzeugs 2 angeordneten Schutzfeld 20 zugeordnet sind, liefern Signale, die immer dann zu einem Abschalten der Gesenkbiegepresse führen, wenn der Lichtstrahl 16 in einem dem Schutzfeld 20 entsprechenden Teilbereich unterbrochen wird. Das Schutzfeld 20 ist dabei innerhalb des Lichtstrahls 16 stationär angeordnet, so dass sichergestellt ist, dass er sich immer direkt unterhalb des Oberwerkzeugs 2 befindet, an welchem der optoelektronische Sensor 12, 14 angebracht ist.

Zusätzlich zum Schutzfeld 20 werden bestimmte Empfangselemente der Empfangseinrichtung 14 als Messfenster 22 definiert, von denen in den Figuren 2a und 2b jeweils zwei Stück exemplarisch dargestellt sind. Die von den Messfenstern 22 gelieferten Signale haben hinsichtlich der erläuterten Abschaltfunktion keine Bedeutung und werden ausschließlich zu einem Vermessen des bearbeiteten Werkstücks 6 verwendet.

Zur Festlegung der Position der Messfenster 22 werden alle von der Empfangseinrichtung 14 gelieferten Signale mittels geeigneter Bildverarbeitungsalgorithmen derart verarbeitet, dass Bereiche des Werkstücks 6, die auf der Empfangseinrichtung 14 einen Schattenriss mit gerader Kontur erzeugen, erkannt werden. Daraufhin werden die Messfenster 22 in solche Bereiche der Empfangseinrichtung 14 verschoben, auf denen solche Schattenrissbereiche mit vorzugsweise gerader Kontur abgebildet sind.

Im Bereich der Messfenster kann somit die Gestalt des Schattenrisses des Werkstückes 6 ermittelt werden. Ebenso ist es beispielsweise möglich, den Verlauf der Unterseite des Werkstücks 6 (siehe Pfeile A gemäß Figur 2a) oder den Verlauf der Oberseite des Werkstücks 6 (siehe Pfeile B in Figur 2b) innerhalb der Messfenster 22 zu bestimmen.

Aus den bestimmten Verläufen von Oberseite, Unterseite oder Schattenriss kann dann durch eine Verarbeitung der Signale der beiden Messfenster 22 der momentan durch die Gesenkbiegepresse erzeugte Biegewinkel des Werkstücks 6 bestimmt werden.

Durch eine ständige Überprüfung der von der Empfangseinrichtung 14 gelieferten Signale dahingehend, wo sich Schattenrissbereiche des Werkstücks 6 mit vorzugsweise gerader Kontur gerade befinden, wird es möglich, die Messfenster 22 mit fortschreitendem Biegeprozess "mitwandern" zu lassen, so dass sich die Position der Messfenster 22 in verschiedenen Phasen des Biegeprozesses verändert, wie dies die Figuren 2a und 2b veranschaulichen. Bei Figur 2b ist der Biegeprozess weiter fortgeschritten als bei Figur 2a. Durch die jeweils angepasste Position der Messfenster 22 kann in beiden Fällen jedoch ermittelt werden, welcher Biegewinkel am Werkstück 6 gerade vorliegt.

Ein Vermessen des Werkstücks 6 über die Messfenster 22 sowie die Abschaltfunktion über das Schutzfeld 20 kann sowohl gleichzeitig als auch alternierend durchgeführt werden.

### Bezugszeichenliste

- 2: Oberwerkzeug
- 4: Unterwerkzeug
- 6: Werkstück
- 8: Öffnungsspalt
- 10: Haltearme
- 12: Sendeeinrichtung
- 14: Empfangseinrichtung
- 16: Lichtstrahl
- 18: Schutzfeld
- 20: Schutzfeld
- 22: Messfenster

## Patentansprüche

1. Verfahren zur Sicherung einer Werkzeugmaschine mit einem ersten Werkzeugteil (2), das Arbeitsbewegungen in Richtung eines zweiten Werkzeugteils (4) ausführt, um hierdurch einen Bearbeitungsvorgang an einem Werkstück (6) durchzuführen, bei dem ein optoelektronischer Sensor (12, 14) ein volumenförmiges Schutzfeld (18, 20) zwischen den Werkzeugteilen (2, 4) überwacht, indem Licht mittels einer Sendeeinrichtung (12) entlang eines zwischen den Werkzeugteilen (2, 4) ausgebildeten Öffnungsspalts (8) ausgesandt und mittels einer Empfangseinrichtung (14) detektiert wird, welche eine Matrix von lichtempfindlichen Elementen umfasst, wobei ein Anhalten des ersten Werkzeugteils (2) erfolgt, wenn einzelne oder bestimmte Gruppen der lichtempfindlichen Elemente kein Licht empfangen,
wobei der Sensor (12, 14) mit dem ersten Werkzeugteil (2) mitbewegt wird und
wobei aus den von lichtempfindlichen Elementen der Empfangseinrichtung gelieferten Signalen vor, während und/oder nach dem Bearbeitungsvorgang Relativpositionen zwischen einzelnen Werkstück- oder Werkzeugbereichen ermittelt werden und
wobei Gruppen benachbarter lichtempfindlicher Elemente als Messfenster (22) definiert und nur die von diesen Messfenstern (22) gelieferten Signale zur Ermittlung der Relativpositionen herangezogen werden und
die Messfenster (22) während eines Bearbeitungsvorgangs innerhalb der Matrix verschoben oder in ihrer Größe und/oder Form verändert werden.

2. Verfahren nach Anspruch 1,
**dadurch gekennzeichnet,**
**dass** durch die Auswertung der von den lichtempfindlichen Elementen gelieferten Signale eine Bestimmung des Schattenrisses von Werkstücken (6) oder Werkzeugen erfolgt.

3. Verfahren nach einem der vorhergehenden Ansprüche,
**dadurch gekennzeichnet,**
**dass** in Abhängigkeit von den ermittelten Relativpositionen
- ein Bearbeitungsvorgang an einem Werkstück (6) bzw. eine Ansteuerung der Werkzeugmaschine,
- eine Beaufschlagung einer Signaleinrichtung,
- eine Klassifizierung des bearbeiteten Werkstücks (6), oder
- eine Klassifizierung eines Werkzeugs
erfolgt.

4. Verfahren nach einem der vorhergehenden Ansprüche,
**dadurch gekennzeichnet,**
**dass** die Veränderung in Abhängigkeit von den ermittelten Relativpositionen, von Betriebszuständen der Werkzeugmaschine und/oder von Eingaben einer Bedienperson erfolgt.

5. Verfahren nach einem der vorhergehenden Ansprüche,
**dadurch gekennzeichnet,**
**dass** mittels Bildverarbeitungsalgorithmen Bereiche des Werkstücks (6) mit geradem Konturverlauf bestimmt und die Messfenster (22) in diese Bereiche gelegt werden.

6. Verfahren nach einem der Ansprüche 1 bis 7,
**dadurch gekennzeichnet,**
**dass** die Messfenster (22) in einer festen Relativposition zum ersten Werkzeugteil (2) positioniert sind oder positioniert werden.

7. Optoelektronischer Sensor als Schutzeinrichtung zur Sicherung einer Werkzeugmaschine mit einem ersten Werkzeugteil (2) zur Ausführung von Arbeitsbewegungen in Richtung eines zweiten Werkzeugteils (4), um einen Bearbeitungsvorgang an einem Werkstück (6) durchzuführen, wobei der Sensor (12, 14) zum Überwachen eines volumenförmigen Schutzfeldes (18, 20) zwischen den Werkzeugteilen (2, 4) eine Sendeeinrichtung (12) zur Aussendung von Licht entlang eines zwischen den Werkzeugteilen (2, 4) ausgebildeten Öffnungsspalts (8) und eine eine Matrix von lichtempfindlichen Elementen umfassende Empfangseinrichtung (14) zur Detektion des ausgesandten Lichts aufweist, wobei der Sensor (12, 14) ferner eine Auswerte- und Steuereinheit zum Anhalten des ersten Werkzeugteils (2) besitzt, wenn einzelne oder bestimmte Gruppen der lichtempfindlichen Elemente kein Licht empfangen, wobei Messfenster (22) durch Gruppen benachbarter lichtempfindlicher Elemente definiert sind, und
wobei der Sensor in einer festen Relativposition zum ersten Werkzeugteil (2) an der Werkzeugmaschine angebracht ist und
wobei die Auswerte- und Steuereinheit zusätzlich zum Anhalten der Werkzeugmaschine bei Auftreten von Gefahren zur Ermittlung von Relativpositionen zwischen einzelnen Werkstück- oder Werkzeugbereichen in Abhängigkeit von den durch die lichtempfindlichen Elemente gelieferten Signalen ausgebildet ist und wobei die Auswerte- und Steuereinheit derart ausgestaltet ist, dass nur die von den Messfenstern (22) gelieferten Signale zur Ermittlung der Relativpositionen herangezogen werden und die Messfenster (22) während eines Bearbeitungsvorgangs innerhalb der Matrix verschoben oder in ihrer Größe und/oder Form verändert werden.

8. Optoelektronischer Sensor nach einem der Anspruch 7,
**dadurch gekennzeichnet,**
**dass** die Sendeeinrichtung (12) zur Aussendung eines parallelen Lichtbündels (16) ausgelegt ist.

9. Optoelektronischer Sensor nach einem der Ansprüche 7 oder 8,
**dadurch gekennzeichnet,**
**dass** die Auswerte- und Steuereinheit und die Empfangseinrichtung (14) miteinander gekoppelt und insbesondere in einem gemeinsamen Gehäuse untergebracht sind.

10. Optoelektronischer Sensor nach einem der Ansprüche 7 bis 9,
**dadurch gekennzeichnet,**
**dass** die Auswerte- und Steuereinheit Datenausgänge zur Abgabe von Abschaltsignalen und von die ermittelten Relativpositionen beschreibenden Daten aufweist.

11. Optoelektronischer Sensor nach einem der Ansprüche 7 bis 10,
**dadurch gekennzeichnet,**
**dass** die Werkzeugmaschine als Gesenk- oder Abkantpresse, Biege-, Schneid- oder Stanzmaschine ausgebildet ist.

## Claims

1. A method for securing a machine tool comprising a first tool part (2) which carries out work movements in the direction of a second tool part (4) in order thereby to perform a machining process on a workpiece (6), wherein an optoelectronic sensor (12, 14) monitors a three-dimensional protected field (18, 20) between the tool parts (2, 4) in that light is transmitted by means of a transmission device (12) along an opening gap (8) formed between the tool parts (2, 4) and is detected by means of a reception device (14) which includes a matrix of light-sensitive elements, wherein the first tool part (2) is stopped if individual light-sensitive elements or specific groups of the light-sensitive elements do not receive any light,
wherein the sensor (12, 14) is moved along with the first tool part (2); and
wherein relative positions between individual workpiece regions or tool regions are determined before, during and/or after the machining process from the signals delivered by light-sensitive elements of the reception device; and
wherein groups of adjacent light-sensitive elements are defined as measurement windows (22) and only the signals delivered by these measurement windows (22) are used to determine the relative positions; and
the measurement windows (22) are displaced within the matrix or their sizes and/or shapes are changed during a machining process.

2. A method in accordance with claim 1,
**characterized in that**
a determination of the silhouette of workpieces (6) or tools takes place by the evaluation of the signals delivered by the light-sensitive elements.

3. A method in accordance with one of the preceding claims,
**characterized in that**
in dependence on the determined relative positions
- a machining process takes place at a workpiece (6) or a control of the machine tool takes place;
- a signal device is acted on;
- a classification of the machined workpiece (6) takes place; or
- a classification of a tool
takes place.

4. A method in accordance with any one of the preceding claims,
**characterized in that**
the change takes place in dependence on the determined relative positions, on operating states of the machine tool and/or on inputs of an operator.

5. A method in accordance with any one of the preceding claims,
**characterized in that**
areas of the workpiece (6) with a straight contour extent are determined by means of image processing algorithms and the measurement windows (22) are placed in these areas.

6. A method in accordance with any one of the claims 1 to 7,
**characterized in that**
the measurement windows (22) are positioned in a fixed relative position to the first tool part (2).

7. An optoelectronic sensor as a protective device for securing a machine tool comprising a first tool part (2) for carrying out work movements in the direction of a second tool part (4) in order thereby to perform a machining process on a workpiece (6), wherein the sensor (12, 14) has a transmission device (4) for the monitoring of a three-dimensional protected field (18, 20) between the tool parts (2, 4) and for the transmission of light along an opening gap (8) formed between the tool parts (2, 4) and a reception device (14) including a matrix of light-sensitive elements for the detection of the transmitted light, wherein the sensor (12, 14) furthermore has an evaluation and control unit to stop the first tool part (2) when individual light-sensitive elements or specific groups of the light-sensitive elements do not receive any light, wherein measurement windows (22) are defined by groups of adjacent light-sensitive elements; and
wherein the sensor is attached in a fixed relative position to the first tool part (2) at the machine tool; and
wherein the evaluation and control unit is configured, in addition to stopping the machine tool on the occurrence of dangers, to determine relative positions between individual workpiece regions or tool regions in dependence on the signals delivered by the light-sensitive elements, and wherein the evaluation and control unit is configured such that only the signals delivered by the measurement windows (22) are used to determine the relative positions and the measurement windows (22) are displaced within the matrix or their size and/or shape is changed during a processing procedure.

8. An optoelectronic sensor in accordance with claim 7,
**characterized in that**
the transmission device (12) is designed for the transmission of a parallel light beam (16).

9. An optoelectronic sensor in accordance with claim 7 or claim 8,
**characterized in that**
the evaluation and control unit and the reception device (14) are coupled to one another and are in particular accommodated in a common housing.

10. An optoelectronic sensor in accordance with any one of the claims 7 to 9,
**characterized in that**
the evaluation and control unit has data outputs for the outputting of switching-off signals and of data describing the determined relative positions.

11. An optoelectronic sensor in accordance with any one of the claims 7 to 10,
**characterized in that**
the machine tool is made as a stamping press or as a press brake, as a bending machine, a cutting machine or a stamping machine.

## Revendications

1. Procédé pour la sécurisation d'une machine-outil, comportant une première partie d'outil (2) qui exécute des mouvements de travail en direction d'une deuxième partie d'outil (4), pour effectuer ainsi une opération de façonnage sur une pièce à oeuvrer (6), dans lequel un capteur optoélectronique (12, 14) surveille un champ de protection (18, 20) en forme de volume entre les parties d'outil (2, 4), en émettant de la lumière au moyen d'un dispositif émetteur (12) le long d'une fente d'ouverture (8) réalisée entre les parties d'outils (2, 4) et en la détectant au moyen d'un dispositif récepteur (14), qui comprend une matrice d'éléments photosensibles, la première partie d'outil (2) étant mise à l'arrêt lorsque des groupes individuels ou déterminés des éléments photosensibles ne reçoivent pas de lumière,
dans lequel le capteur (12, 14) est déplacé conjointement avec la première partie d'outil (2), et
dans lequel à partir des signaux fournis par les éléments photosensibles, on détermine des positions relatives entre des zones individuelles de pièces à oeuvrer ou d'outils avant, pendant et/ou après l'opération de façonnage, et
dans lequel des groupes d'éléments photosensibles voisins sont définis en tant que fenêtre de mesure (22) et seulement les signaux fournis par ces fenêtres de mesure (22) sont mis à contribution pour déterminer les positions relatives, et
dans lequel les fenêtres de mesure (22) sont déplacées à l'intérieur de la matrice pendant une opération de façonnage ou sont modifiées du point de vue de leur taille et/ou de leur forme.

2. Procédé selon la revendication 1, **caractérisé en ce que** par l'analyse des signaux fournis par les éléments photosensibles a lieu une détermination de la silhouette de pièces à oeuvrer (6) ou d'outils.

3. Procédé selon l'une des revendications précédentes, **caractérisé en ce qu'**en fonction des positions relatives déterminées ont lieu :
- une opération de façonnage sur une pièce à oeuvrer (6) ou un pilotage de la machine-outil,
- une sollicitation d'un dispositif de signal,
- une classification de la pièce à oeuvrer (6) usinée, ou
- une classification d'un outil.

4. Procédé selon l'une des revendications précédentes, **caractérisé en ce que** la modification a lieu en fonction des positions relatives déterminées, d'états de fonctionnement de la machine-outil et/ou d'entrées d'un opérateur.

5. Procédé selon l'une des revendications précédentes, **caractérisé en ce qu'**au moyen d'algorithmes de traitement d'images, on détermine des zones de la pièce à oeuvrer (6) avec tracé de contour rectiligne et les fenêtres de mesure (22) sont placées dans ces zones.

6. Procédé selon l'une des revendications 1 à 5, **caractérisé en ce que** les fenêtres de mesure (22) se trouvent ou sont positionnées dans une position relative fixe par rapport à la première partie d'outil (2).

7. Capteur optoélectronique servant de dispositif de protection pour la sécurisation d'une machine-outil comportant une première partie d'outil (2) pour exécuter des mouvements de travail en direction d'une deuxième partie d'outil (4), pour effectuer une opération de façonnage sur une pièce à oeuvrer (6), dans lequel le capteur (12, 14), pour surveiller un champ de protection (18, 20) en forme de volume entre les parties d'outil (2, 4), présente un dispositif émetteur (12) pour émettre de la lumière le long d'une fente d'ouverture (8) réalisée entre les parties d'outils (2, 4) et un dispositif récepteur (14), qui comprend une matrice d'éléments photosensibles, pour détecter la lumière émise, le capteur (12, 14) possédant en outre une unité d'analyse et de commande pour arrêter la première partie d'outil (2) lorsque des groupes individuels ou déterminés des éléments photosensibles ne reçoivent pas de lumière, dans lequel des fenêtres de mesure (22) sont définis par des groupes d'éléments photosensibles voisins, et
le capteur est monté sur la machine-outil dans une position relative fixe par rapport à la première partie d'outil (2), et
l'unité d'analyse et de commande qui est réalisée pour arrêter la machine-outil en cas de danger, est additionnellement réalisée pour déterminer des positions relatives entre les zones individuelles de pièces à oeuvrer ou d'outils en fonction des signaux fournis par les éléments photosensibles, et l'unité d'analyse et de commande est conçue de telle façon que seulement les signaux fournis par les fenêtres de mesure (22) sont mis à contribution pour déterminer les positions relatives, et les fenêtres de mesure (22) sont déplacées à l'intérieur de la matrice pendant une opération de façonnage ou sont modifiées du point de vue de leur taille et/ou de leur forme.

8. Capteur optoélectronique selon la revendication 7, **caractérisé en ce que** le dispositif émetteur (12) est conçu pour émettre un faisceau lumineux (16) parallèle.

9. Capteur optoélectronique selon l'une des revendications 7 ou 8, **caractérisé en ce que** l'unité d'analyse et de commande et le dispositif récepteur (14) sont couplés l'un à l'autre et logés en particulier dans un boîtier commun.

10. Capteur optoélectronique selon l'une des revendications 7 à 9, **caractérisé en ce que** l'unité d'analyse et de commande présente des sorties de données pour fournir des signaux d'arrêt et des données décrivant les positions relatives déterminées.

11. Capteur optoélectronique selon l'une des revendications 7 à 10, **caractérisé en ce que** la machine-outil est réalisée sous forme de presse à estamper ou de presse plieuse, de machine à plier, à découper ou à estamper.
